# EUROPEAN PATENT APPLICATION

(11) **EP 4 002 790 A1**
(43) Date of publication of application: **25.05.2022**
(21) Application number: 20207606.3
(22) Date of filing: 13.11.2020
(51) Int. Cl.: H04L 29/06, H04L 9/08, H04W 12/04

(54) **A PROVISIONING METHOD AND SYSTEM**

(71) Applicant: Secure Thingz Limited, Trumpington, Cambridge CB2 9FF (GB)
(72) Inventor: DUNNE, Peter, Huntingdon, PE29 2NG (GB); WOODRUFF, Tim, Cambridge, CB2 1RR (GB)
(74) Representative: Patentship Patentanwaltsgesellschaft mbH

(57) **Abstract**

The invention relates to a method for provisioning a plurality of electronic devices (170) with a respective provisioning data set (150, 150'), wherein the respective provisioning data set (150, 150') comprises at least one respective cryptographic key. The method comprises; in a development provisioning stage, provisioning one or more of the plurality of electronic devices (170) with the respective provisioning data set (150), wherein in the development provisioning stage the at least one respective cryptographic key has a first key entropy. Moreover, the method comprises, in a production provisioning stage, provisioning one or more of the plurality of electronic devices (170) with the respective provisioning data set (150'), wherein in the production previsioning stage the at least one respective cryptographic key has a second key entropy, wherein the first key entropy is smaller than the second key entropy.

## Description

### TECHNICAL FIELD

The invention relates to the secure production and provisioning of electronic devices. More specifically, the invention relates to a method and system for provisioning of electronic devices.

### BACKGROUND OF THE INVENTION

The production and assembly of state-of-the-art electronic consumer equipment, such as smartphones, tablet computers as well as other types of loT devices, often happens in a distributed fashion in that the various electronic components or devices, including the electronic chips or microprocessors of the electronic consumer equipment are manufactured, provisioned or personalized and finally assembled at different locations and by different parties. For instance, an electronic chip or microprocessor for an electronic consumer equipment may be originally manufactured by a chip manufacturer and provisioned by another party with personalized provisioning data, before being assembled into the final end product by the manufacturer of the electronic consumer equipment, e.g. an OEM (Original Equipment Manufacturer).

Often the personalized provisioning data includes firmware, software applications or other types of program code of the OEM as well as one or more personalized cryptographic keys, which are unique for each electronic device to be provisioned. However, before the actual production of electronics devices for the OEM, i.e. the provisioning of the electronics devices with personalized provisioning data, the provisioning process must usually be tested to work correctly. Generally, this development and testing phase is done by the OEM.

For such distributed processing chains of electronic equipment there is a need for apparatuses, systems and methods allowing for a secure and controlled provisioning of electronic components or devices, such as chips or microprocessors of the electronic equipment.

### SUMMARY OF THE INVENTION

It is therefore an object of the invention to provide apparatuses, systems and methods allowing for a secure and controlled provisioning of electronic devices, such as chips or microprocessors for electronic equipment.

The foregoing and other objects are achieved by the subject matter of the independent claims. Further implementation forms are apparent from the dependent claims, the description and the figures.

According to a first aspect of the invention a method for provisioning a plurality of electronic devices with a respective personalized provisioning data set is provided, wherein the respective provisioning data set comprises at least one respective cryptographic key. The electronic devices may comprise chips, microprocessors or other programmable electronic components, such as Flash memories, electrically erasable programmable read only memories (EEPROM), programmable logic devices (PLDs), field programmable gate arrays (FPGAs), and microcontrollers incorporating non-volatile memory elements. The respective personalized provisioning data set may include in addition to one or more unique, i.e. personalized cryptographic keys a firmware, a software application or another type of program code. The respective personalized provisioning data set may be digitally signed.

The method comprises, in a development provisioning stage, i.e. in a stage where the provisioning of the electronic devices is developed and tested, a step of provisioning one or more of the plurality of electronic devices with the respective provisioning data set, wherein in the development provisioning stage the at least one respective cryptographic key has a first key entropy. Furthermore, the method comprises, in a production provisioning stage, i.e. in a stage where the electronic devices are provisioned for production, a further step of provisioning one or more of the plurality of electronic devices with the respective provisioning data set, wherein in the production provisioning stage the at least one respective cryptographic key has a second key entropy, wherein the first key entropy is smaller than the second key entropy.

In a further embodiment, the method further comprises, in the production provisioning stage, transmitting the respective provisioning data set from a production provisioning control apparatus to a production provisioning equipment server.

In a further embodiment, the at least one respective cryptographic key, in the development provisioning stage, has a first key size and, in the production provisioning stage, the at least one respective cryptographic key has a second key size, wherein the first key size is equal to the second key size.

In a further embodiment, in the development provisioning stage, the method comprises including the at least one respective cryptographic key in the respective personalized provisioning data set and, in the production provisioning stage, including the at least one respective cryptographic key in the respective personalized provisioning data set.

In a further embodiment, the method further comprises generating the at least one respective cryptographic key in the development provisioning stage and/or generating the at least one respective cryptographic key in the production provisioning stage. In a further embodiment, the method may comprise in the production provisioning stage receiving the at least one respective cryptographic key from a remote entity.

In a further embodiment, the method comprises generating, in the development provisioning stage, the at least one respective cryptographic key based on a key generation mechanism and generating, in the production provisioning stage, the at least one respective cryptographic key based on the same key generation mechanism.

In a further embodiment, the method comprises, in the development provisioning stage, generating the at least one respective cryptographic key using a first set of random numbers or random seed numbers and, in the production provisioning stage, generating the at least one respective cryptographic key using a second set of random numbers or random seed numbers, wherein the entropy of the first set of random numbers is smaller than the entropy of the second set of random numbers.

In a further embodiment, the method further comprises: receiving an electronic provisioning token, wherein the electronic provisioning token comprises a provisioning counter, the provisioning counter indicating a total number of transmissions of the respective personalized provisioning data set towards a provisioning equipment server; retrieving the provisioning counter from the received electronic provisioning token; and transmitting the respective personalized provisioning data set towards the provisioning equipment server. In the production provisioning stage, the method further comprises updating a value of the provisioning counter for each transmission of the respective personalized provisioning data set towards the provisioning equipment server to obtain an updated provisioning counter. Moreover, in the production provisioning stage, the method further comprises prohibiting a further transmission of the respective personalized provisioning data set towards the provisioning equipment server, if the updated provisioning counter indicates that the total number of transmissions has been reached. Advantageously, by means of the electronic provisioning token the method has control over the provisioning of the electronic devices by the provisioning equipment server. The provisioning control apparatus and the provisioning equipment server may be under the control of different parties.

In a further embodiment, the method comprises receiving the electronic provisioning token over a communication network, such as the Internet, from a remote server. The remote server may be the server of or associated with an electronic equipment manufacturer (herein also referred to as OEM) that uses the electronic devices provisioned with the respective personalized provisioning data set, in the production provisioning stage, for assembling electronic equipment, such as smartphones, tablet computers as well as other types of loT devices. Advantageously, this allows the electronic equipment manufacturer to have control over the provisioning of the electronic devices by the provisioning equipment server with its firmware. In an embodiment, the development provisioning stage of the method may be implemented by a development provisioning apparatus operated by the electronic equipment manufacturer, i.e. the OEM.

In a further embodiment, the method comprises, in the production provisioning stage, transmitting the respective provisioning data set towards the provisioning equipment server via a wired connection. In an embodiment, the provisioning equipment server may be implemented as a personal computer and the provisioning control apparatus may be implemented as a PC card inserted in the provisioning equipment server.

In a further embodiment, the electronic provisioning token may comprise provisioning control data for controlling communications with the provisioning equipment server, wherein the method comprises retrieving the provisioning control data from the electronic provisioning token and controlling communications with the provisioning equipment server according to the provisioning control data. In an embodiment, these provisioning control data may be provided in a header of the electronic provisioning token. Advantageously, this allows controlling the communication between the provisioning control apparatus and the provisioning equipment server, for instance, by selecting a secure communication protocol.

In a further embodiment, the electronic provisioning token may further comprise data defining one or more validity time periods of the electronic provisioning token, wherein the method further comprises prohibiting a transmission of the respective personalized provisioning data set towards the provisioning equipment server outside of the one or more validity time periods. Advantageously, this allows restricting the provisioning of the electronic devices to specific times specified, for instance, by the electronic equipment manufacturer.

In a further embodiment, the electronic provisioning token may further comprise a token identifier for identifying the electronic provisioning token, wherein the method comprises storing the token identifier in a list of electronic provisioning tokens already used or in use (for instance, in an electronic memory of the production provisioning control apparatus). Advantageously, this allows protecting the production provisioning control apparatus against a replay attack, i.e. an attack, where an already used electronic provisioning token is provided again for provisioning electronic devices. In an embodiment, the token identifier may be a nonce generated when generating the electronic provisioning token.

In a further embodiment, the electronic provisioning token may further comprise an electronic device type identifier, wherein the method comprises prohibiting a transmission of the program code towards the provisioning equipment server for provisioning an electronic device not corresponding to the electronic device type identified by the electronic device type identifier. Advantageously, this allows making sure that only the intended electronic devices are provisioned with the program code using the electronic provisioning token. The electronic device type identifier may be, for instance, an identifier of a specific chip or microprocessor type.

In a further embodiment, the method further comprises receiving the electronic provisioning token in encrypted form and decrypting the encrypted electronic provisioning token. A hybrid encryption scheme, such as PKCS#7, may be used. Advantageously, this allows preventing a malicious party from using an intercepted electronic provisioning token.

In a further embodiment, the electronic provisioning token comprises a digital signature based on a private key of a token generator server, wherein the method further comprises verifying the digital signature of the electronic provisioning token using a public key of the token generator server. Advantageously, this allows the production provisioning control apparatus to verify that the electronic provisioning control token initially has been generated by a trustworthy source, namely the token generator server.

According to a second aspect the invention relates to a provisioning control system implementing the method according to the first aspect. The provisioning control system may comprise a production provisioning control apparatus and a production provisioning equipment server being electrically connectable with a plurality of electronic devices for provisioning the plurality of electronic devices with a respective personalized provisioning data set, wherein the production provisioning control apparatus is coupled to the production provisioning equipment server for controlling the provisioning of the one or more electronic devices.

In a further embodiment of the system according to the second aspect, the provisioning control system further comprises a token generator server configured to generate the electronic provisioning token. The token generator server may be configured to generate the electronic provisioning token in response to a token request from a remote server, e.g. the remote server of the electronic equipment manufacturer. Advantageously, this allows the token generator server to generate and provide the electronic provisioning token on demand. In response to the request the token generator server may provide the generated electronic provisioning token to the remote server, which, in turn, may forward the generated electronic provisioning token to the production provisioning control apparatus. Alternatively, the token generator server may provide the generated electronic provisioning token directly to the production provisioning control apparatus.

In a further embodiment of the system according to the second aspect, the token generator server is configured to verify a digital signature of the token request using a public key of the remote server, before providing the electronic provisioning token to the remote server. Advantageously, this allows the token generator server to verify the remote server to be trustworthy.

In a further embodiment of the system according to the second aspect, the token generator server is configured to digitally sign the electronic provisioning token using a private key. Advantageously, this allows the production provisioning control apparatus to verify that the electronic provisioning token has been generated by a trustworthy source.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a provisioning control system according to an embodiment of the invention implementing a provisioning method according to an embodiment of the invention;
Fig. 2 shows a flow diagram illustrating steps of a provisioning method according to an embodiment of the invention; and
Fig. 3 shows a schematic diagram illustrating an exemplary electronic provisioning token used by the provisioning control system of figure 1.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

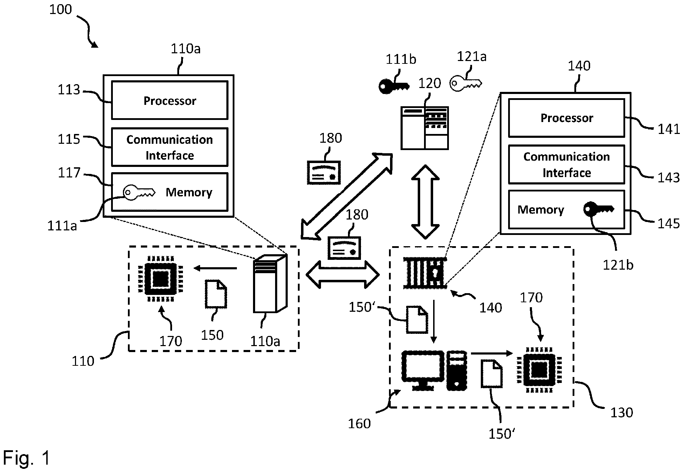

Figure 1 shows a schematic diagram of a provisioning control system 100 according to an embodiment of the invention. As will be described in more detail further below, the provisioning control system 100 may comprise in addition to a production provisioning control apparatus 140 a remote server 110a, a token generator server 120 and a production provisioning equipment server 160 for provisioning or personalizing electronic devices 170, such as chips or microprocessors 170 with a respective personalized provisioning data set 150'. In an embodiment, the remote server 110a may comprise or implement a development provisioning apparatus 110a for testing and developing the provisioning of the electronic devices 170 with a respective personalized provisioning data set 150. In an embodiment, the remote server 110a may be operated by the electronic equipment manufacturer, i.e. the OEM as a part of a testing and developing environment 110 of the OEM. As illustrated in figure 1, the development provisioning apparatus 110a may comprise a processor 113, a communication interface 115 and a memory 117.

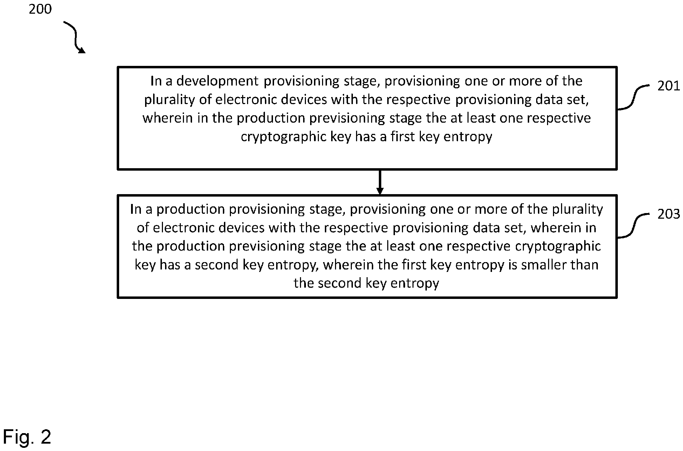

Under further reference to figure 2 and as will be described in more detail below, the provisioning control system 100 of figure 1 may implement a method 200 for provisioning the plurality of electronic devices 170 with a respective provisioning data set 150, 150', wherein the respective provisioning data set 150, 150' comprises at least one respective cryptographic key. As shown in figure 2, the method 200 comprises, in a development provisioning stage, a first step of provisioning 201 one or more of the plurality of electronic devices 170 with the respective provisioning data set 150, wherein in the development provisioning stage the at least one respective cryptographic key has a first key entropy. In an embodiment, the development provisioning stage is implemented by the development provisioning apparatus 110a operated by the OEM. Moreover, the method 200 comprises, in a production provisioning stage, a further step of provisioning 203 one or more of the plurality of electronic devices 170 with the respective provisioning data set 150', wherein in the production previsioning stage the at least one respective cryptographic key has a second key entropy, wherein the first key entropy is smaller than the second key entropy. As will be described in more detail below, the production provisioning stage, is primarily implemented by the production provisioning control apparatus 140.

As illustrated in figure 1, the production provisioning control apparatus 140, the remote server 110 and the token generator server 120 may be configured to communicate with each other via a communication network, such as the Internet. Thus, the production provisioning control apparatus 140, the remote server 110 and the token generator server 120 may be at different locations and under the control of different parties. As illustrated in figure 1, the production provisioning control apparatus 140 and the production provisioning equipment server 160 may be located within a production environment 130, such as a personalization factory 130. As already mentioned above, the remote server 110 implementing the development provisioning apparatus 110a may be under the control or associated with an electronic equipment manufacturer, e.g. an OEM, wherein the electronic equipment manufacturer assembles electronic equipment, such as smartphones, tablet computers or other types of loT or electronic consumer equipment, using the electronic devices 170 provisioned by the production provisioning equipment server 160 with the respective personalized provisioning data set 150. In an embodiment, the respective personalized provisioning data set 150 may comprise a firmware or software application of the electronic equipment manufacturer associated with the remote server 110. Advantageously, this allows the electronic equipment manufacturer to have control over the provisioning of the electronic devices with its firmware or software applications.

In an embodiment, the production provisioning control apparatus 140, the remote server 110 and the token generator server 120 are configured to securely communicate with each other using one or more cryptographic schemes, such as a public key infrastructure and/or a hybrid cryptographic scheme.

The production provisioning control apparatus 140 is configured to be coupled to the provisioning equipment server 160, for instance, by a wired or a wireless connection. In an embodiment, the production provisioning equipment server 160 may be implemented as a personal computer and the production provisioning control apparatus 140 may be implemented as a PC card inserted in the production provisioning equipment server 160. The production provisioning equipment server 160 may comprise an electrical and/or mechanical interface for interacting directly or indirectly via a provisioning equipment with the electronic devices 170. For instance, the production provisioning equipment server 160 may comprise a personalization tray for personalizing a batch of electronic devices 170 inserted therein.

In the embodiment illustrated in figure 1 the production provisioning control apparatus 140 comprises a processor 141, a communication interface 143 and a non-transient memory 145. The communication interface 143 is configured to transmit the plurality of personalized provisioning data sets 150' to the production provisioning equipment server 160.

In an embodiment, the respective cryptographic key, in the development provisioning stage, has a first key size and, in the production provisioning stage, the respective cryptographic key has a second key size, wherein the first key size is equal to the second key size.

In an embodiment, in the development provisioning stage, the method 200 comprises including the respective cryptographic key in the respective personalized provisioning data set 150, wherein, in the production provisioning stage, the method 200 comprises including the respective cryptographic key in the respective personalized provisioning data set 150'.

In an embodiment, the method 200 comprises generating the at least one respective cryptographic key in the development provisioning stage and/or the at least one respective cryptographic key in the production provisioning stage. In a further embodiment, the method 200 may comprise receiving the at least one respective cryptographic key in the development provisioning stage and/or the at least one respective cryptographic key in the production provisioning stage from a remote entity, such as the remote OEM server 110 and/or the token generator server 120.

In an embodiment, the method 200 comprises generating the at least one respective cryptographic key in the development provisioning stage based on a key generation mechanism and generating the at least one respective cryptographic key in the production provisioning stage based on the same key generation mechanism. Thus, in an embodiment, the method 200 may generate the cryptographic key in the development provisioning stage and the cryptographic key in the production provisioning stage using the same key generation mechanism for ensuring, for instance, that the cryptographic keys have the same key size.

In a further embodiment, the method 200 comprises generating the cryptographic key in the development provisioning stage using a first set of random numbers or random seed numbers and the cryptographic key in the production provisioning stage using a second set of random numbers or random seed numbers, wherein the entropy of the first set of random numbers is smaller than the entropy of the second set of random numbers. By way of example, in an embodiment, in the development provisioning stage a reduced set of numbers may be used as the source for a cryptographic key generation mechanism. In an embodiment, rather than using a small set of "random" numbers, the numbers may be chosen such that they do not appear very random at all. By way of example, the following "random numbers" may be used for the cryptographic key in the development provisioning stage:
0x111111111111111111111111111111111111111111111111
0x222222222222222222222222222222222222222222222222

Thus, in an embodiment, the method 200 may implement the following scheme in the development provisioning stage for generating the respective cryptographic key.
1. When generating the respective cryptographic key, the "random number" source may be chosen from a reduced set (such as a set of 256 numbers).
2. The number sources for the respective first cryptographic keys are chosen to look not random at all, e.g. all the bytes in the number may each be set to the same value (0x1111.... , 0x2222... etc.). These simple number sequences hence values of random numbers to be used in the first operation mode could be made publicly available.

As illustrated in figure 1, in an embodiment the communication interface 143 of the production provisioning control apparatus 140 is configured to receive an electronic provisioning token 180. In an embodiment, the electronic provision token 180 is generated by the token generator server 120. In an embodiment, the token generator server 120 may be configured to generate the electronic provisioning token 180 in response to a token request from the remote server 110 associated with the electronic equipment manufacturer. Advantageously, this allows the token generator server 120 to generate and provide the electronic provisioning token 180 on demand, i.e. when the electronic equipment manufacturer wants to obtain electronic devices 170 provisioned by the electronic equipment server 160 with a respective personalized provisioning data set 150 for assembling electronic equipment.

In response to the request the token generator server 120 may provide the generated electronic provisioning token 180 to the remote server 110, which, in turn, may forward the generated electronic provisioning token 180 to the production provisioning control apparatus 140. In a further embodiment, the token generator server 120 may provide the generated electronic provisioning token 180 directly to the production provisioning control apparatus 140.

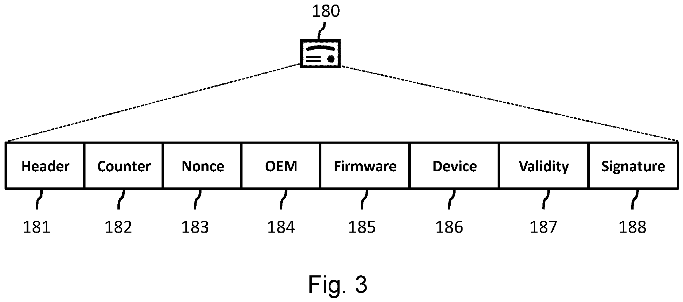

In an embodiment, the electronic provisioning token 180 comprises a provisioning counter 182 (as illustrated in figure 3) indicating a total number of allowed transmissions of the program code 150 towards the production provisioning equipment server 160 in the production provisioning stage. Once received by the communication interface 143, the processor 141 of the production provisioning control apparatus 140 is configured to retrieve the provisioning counter 182 from the received electronic provisioning token 180, i.e. the total number of allowed transmissions of the respective personalized provisioning data set 150' via the communication interface 143 to the production provisioning equipment server 160 in the production provisioning stage. For each transmission of the respective personalized provisioning data set 150' via the communication interface 143 to the provisioning equipment server 160 the processor 141 of the production provisioning control apparatus 140 is configured in the production provisioning stage to update the value of the provisioning counter 182 and to obtain an updated value of the provisioning counter 182. For instance, the processor 141 may be configured to decrement the current value of the provisioning counter 182 by one for each transmission of the respective personalized provisioning data set 150' via the communication interface 143 to the production provisioning equipment server 160.

In the production provisioning stage the processor 141 of the production provisioning control apparatus 140 is further configured to prohibit a further transmission of the respective personalized provisioning data set 150' to the production provisioning equipment server 160, if the updated value of the provisioning counter 182 indicates that the total number of transmissions has been reached. In other words, once the total number of electronic devices 170 (as indicated by the initial provision counter 182) have been provisioned with the respective personalized provisioning data set 150' by the production provisioning equipment server 160 in the production provisioning stage, the production provisioning control apparatus 140 blocks the provisioning of further electronic devices 170 with the respective personalized provisioning data set 150' by the production provisioning equipment server 160. In an embodiment, the respective personalized provisioning data set 150' or at least a part thereof is initially provided to the production provisioning control apparatus 140 by the remote server 110 associated with the electronic equipment manufacturer.

In an embodiment, the communication interface 143 of the production provisioning control apparatus 140 is configured to receive the electronic provisioning token 180 in encrypted form, wherein the processor 141 is configured to decrypt the encrypted electronic provisioning token 180. For instance, a hybrid encryption scheme, such as PKCS#7, may be used. Advantageously, this allows preventing a malicious party from successfully using an intercepted electronic provisioning token 180.

In an embodiment, the electronic provisioning token 180 comprises a digital signature 188 (as illustrated in figure 3) based on a private key 121a of the token generator server 120, wherein the processor 141 of the production provisioning control apparatus 140 is configured to verify the digital signature 188 of the electronic provisioning token 180 using a public key 121b of the token generator server 120. Advantageously, this allows the production provisioning control apparatus 140 to verify that the electronic provisioning control token 180 initially has been generated by a trustworthy source, namely the token generator server 120. As illustrated in figure 1, the public key 121b of the token generator server 120 may be stored in the memory 145 of the production provisioning control apparatus 140.

As illustrated in figure 3, in addition to the provisioning counter 182 the electronic provisioning token 180 may comprise further data, such as provisioning control data 181 for controlling communications with the production provisioning equipment server 160. The processor 141 may be configured to retrieve the provisioning control data 181 from the electronic provisioning token 180 and to control communications of the communication interface 143 with the production provisioning equipment server 160 according to the provisioning control data 181. As illustrated in figure 3, these provisioning control data 181 may be provided in a header 181 of the electronic provisioning token 180. Advantageously, this allows controlling the communication between the production provisioning control apparatus 140 and the production provisioning equipment server 160, for instance, by selecting a secure communication protocol on the basis of the provisioning control data 181.

Moreover, the electronic provisioning token 180 may comprise data 187 defining one or more validity time periods of the electronic provisioning token 180. The processor 141 may be configured to prohibit a transmission of the provisioning data set 150' towards the production provisioning equipment server 160 outside of the one or more validity time periods. Advantageously, this allows restricting the provisioning of the electronic devices 170 with the provisioning data set 150 to specific times specified, for instance, by the electronic equipment manufacturer.

Furthermore, the electronic provisioning token 180 may comprise a token identifier 183 for uniquely identifying the electronic provisioning token 180, wherein the electronic memory 145 of the production provisioning control apparatus 140 is configured to store the token identifier 183 in a list (i.e. black list) of electronic provisioning tokens 180 already used or in use. Advantageously, this allows protecting the production provisioning control apparatus 140 against a replay attack, i.e. an attack, where an already used electronic provisioning token is provided again for provisioning electronic devices. In an embodiment, the token identifier 183 may be a nonce 183 generated by the token generator server 120 when generating the electronic provisioning token 180.

As illustrated in figure 3, the electronic provisioning token 180 may further comprise an electronic device type identifier 186. The processor 141 may be configured to prohibit a transmission of the respective personalized provisioning data set 150 towards the production provisioning equipment server 160 for provisioning an electronic device 170 not corresponding to the electronic device type identified by the electronic device type identifier 186. Advantageously, this allows making sure that only the intended electronic devices 170 are provisioned with the respective personalized provisioning data set 150' using the electronic provisioning token 180. The electronic device type identifier 186 may be, for instance, an identifier of a specific chip or microprocessor type.

Moreover, the electronic provisioning token 180 may further comprise a firmware identifier 185. The processor 141 may be configured to prohibit a transmission of the respective personalized provisioning data set 150', including a firmware, towards the production provisioning equipment server 160, if the firmware differs from the firmware identified by the firmware identifier 185. Advantageously, this allows making sure that only the intended firmware 150 is used for provisioning the electronic devices 170. As illustrated in figure 3, the electronic provisioning token 180 may further comprise an identifier 184 for identifying the electronic equipment manufacturer, e.g. OEM.

As will be appreciated, embodiments of the invention provide a higher flexibility with respect to the secure production and personalization of electronic devices and equipment. Moreover, embodiments of the invention allow delegating secure production of electronic devices and components for electronic equipment. Moreover, embodiments of the invention allow load balancing and on-demand production/personalization of security critical systems. Moreover, using reduced entropy keys in the development provisioning stage has the advantage that these keys can be easily identified which is a benefit, for instance, for software development debugging purposes. Moreover, the OEM is prevented from using the low entropy development keys for production, which are more vulnerable to security attacks by a malicious third party.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A method (200) for provisioning a plurality of electronic devices (170) with a respective provisioning data set (150, 150'), wherein the respective provisioning data set (150, 150') comprises at least one respective cryptographic key, wherein the method (200) comprises:
in a development provisioning stage, provisioning (201) one or more of the plurality of electronic devices (170) with the respective provisioning data set (150), wherein in the development provisioning stage the at least one respective cryptographic key has a first key entropy;
in a production provisioning stage, provisioning (203) one or more of the plurality of electronic devices (170) with the respective provisioning data set (150'), wherein in the production previsioning stage the at least one respective cryptographic key has a second key entropy, wherein the first key entropy is smaller than the second key entropy.

2. The method (200) of claim 1, wherein the method (200) further comprises, in the production provisioning stage, transmitting the respective provisioning data set (150, 150') from a production provisioning control apparatus to a production provisioning equipment server.

3. The method (200) of claim 1 or 2, wherein, in the development provisioning stage, the at least one respective cryptographic key has a first key size and, in the production provisioning stage, the at least one respective cryptographic key has a second key size, wherein the first key size is equal to the second key size.

4. The method (200) of any one of the preceding claims, wherein the method (200) comprises, in the development provisioning stage, including the at least one respective cryptographic key in the respective provisioning data set (150) and, in the production provisioning stage, including the at least one respective cryptographic key in the respective provisioning data set (150').

5. The method (200) of any one of the preceding claims, wherein the method (200) further comprises generating the at least one respective cryptographic key in the development provisioning stage and/or generating the at least one respective cryptographic key in the production provisioning stage.

6. The method (200) of claim 5, wherein the method (200) comprises generating, in the development provisioning stage, the at least one respective cryptographic key based on a key generation mechanism and generating, in the production provisioning stage, the at least one respective cryptographic key based on the key generation mechanism.

7. The method (200) of claim 5 or 6, wherein the method (200) comprises, in the development provisioning stage,, generating the at least one respective cryptographic key using a first set of random seed numbers and, in the production provisioning stage, generating the at least one respective cryptographic key using a second set of random seed numbers, wherein the entropy of the first set of random numbers is smaller than the entropy of the second set of random numbers.

8. The method (200) of claim 7, wherein the second set of random numbers comprises more random numbers than the first set of random numbers.

9. The method (200) of any one of the preceding claims, wherein the method (200) further comprises receiving an electronic provisioning token (180), wherein the electronic provisioning token (180) comprises a provisioning counter (182), the provisioning counter (182) indicating a total number of transmissions of the respective provisioning data set (150') towards a provisioning equipment server (160);
retrieving the provisioning counter (182) from the received electronic provisioning token (180);
transmitting the respective provisioning data set (150') towards the provisioning equipment server (160);
in the production provisioning stage, updating a value of the provisioning counter (182) for each transmission of the respective provisioning data set (150') towards the provisioning equipment server (160) to obtain an updated provisioning counter (182); and
in the production provisioning stage, prohibiting a further transmission of the respective personalized provisioning data set (150) towards the provisioning equipment server (160) if the updated provisioning counter (182) indicates that the total number of transmissions has been reached.

10. The method (200) of claim 9, wherein the method (200) comprises the step of receiving the electronic provisioning token (180) over a communication network from a remote server (110).

11. The method (200) of claim 9 or 10, wherein the method (200) comprises, in the production provisioning stage, transmitting the respective provisioning data set (150') towards the provisioning equipment server (160) via a wired connection.

12. The method (200) of any one of claims 9 to 11, wherein the electronic provisioning token (180) comprises provisioning control data (181) for controlling communications with the provisioning equipment server (160), and wherein the method (200) comprises retrieving the provisioning control data (181) from the electronic provisioning token (180) and controlling communications with the provisioning equipment server (160) according to the provisioning control data (181).

13. The method (200) of any one of claims 9 to 12, wherein the electronic provisioning token (180) further comprises a token identifier (183) for identifying the electronic provisioning token (180) and wherein the method (200) further comprises storing the token identifier (183) in a list of electronic provisioning tokens already used or in use.

14. The method (200) of any one of claims 9 to 13, wherein the method (200) comprises receiving the electronic provisioning token (180) in encrypted form and decrypting the encrypted electronic provisioning token (180).

15. The method (200) of any one of claims 9 to 14, wherein the electronic provisioning token (180) comprises a digital signature (188) based on a private key (121a) of a token generator server (120) and wherein the method (200) further comprises verifying the digital signature (188) of the electronic provisioning token (180) using a public key (121b) of the token generator server (120).
